# FASCICULE DE BREVET EUROPEEN

(11) **EP 4 237 988 B1**
(45) Date de publication et mention de la délivrance du brevet: **22.01.2025**
(21) Numéro de dépôt: 21805434.4
(22) Date de dépôt: 29.10.2021
(51) Int. Cl.: G06K 7/00

(54) **CONNECTEUR DE CARTE À PUCE SOUDABLE ET PROCÉDÉ DE MONTAGE CORRESPONDANT**
LÖTBARER CHIPKARTENVERBINDER UND ENTSPRECHENDES MONTAGEVERFAHREN
SOLDERABLE CHIP CARD CONNECTOR AND CORRESPONDING ASSEMBLY METHOD

(30) Priorité: 30.10.2020 FR 2011174
(43) Date de publication de la demande: 06.09.2023
(73) Titulaire: Banks and Acquirers International Holding, 75015 Paris (FR)
(72) Inventeur: ANDRÉ, Jérôme, 26800 MONTOISON (FR); GRANDDIDIER, Yann, 07610 LEMPS (FR)
(74) Mandataire: Germain Maureau
(86) Numéro de dépôt international: PCT/EP2021/080213
(87) Numéro de publication internationale: WO 2022/090516

(56) Documents cités:
- EP-A2- 1 059 600
- WO-A1-97/39418
- FR-A1- 3 085 514

## Description

### 1. Domaine de l'invention

L'invention se situe dans le domaine des lecteurs de carte à mémoire. L'invention a plus particulièrement comme objet un lecteur de carte à mémoire destiné à être monté dans un terminal de lecture de carte à mémoire, tel qu'un terminal de paiement ou un terminal d'identification par exemple. Plus généralement, l'invention se rapporte à tout type de terminal pouvant comprendre un lecteur de carte à mémoire.

### 2. Art Antérieur

Les terminaux de lecture de cartes à mémoire comprennent, outre un lecteur de cartes à mémoire, un certain nombre de composants tels qu'un clavier, un écran, un ou plusieurs processeurs, de la mémoire, une source d'alimentation électrique. Depuis plusieurs années, les terminaux de lecture de cartes à mémoire ont vu leurs fonctions être multipliées. Ceci est particulièrement vrai pour les terminaux de paiement. Outre la fonction de paiement, ces terminaux embarquent des fonctions de communication en réseau, des fonctions de détection de cartes à mémoire sans contact (cartes « contactless »), des fonctions de gestion de coupons (par exemple des coupons de fidélité), etc.

En plus de la multiplication de ces fonctions auxiliaires, les terminaux de lecture de cartes à mémoire doivent de plus être résistants aux diverses attaques ou tentatives de fraudes dont ils sont fréquemment l'objet. Afin d'obtenir une homogénéité de la résistance des terminaux aux attaques, des normes internationales ont été édictées. Dans le domaine du paiement, par exemple, la norme PCI PED (« Payment Card Industry - Pin Entry Device ») édicte des exigences en matière d'intrusion et de détection des tentatives d'attaques sur les terminaux. Il ne s'agit pas de la seule norme en vigueur.

Cependant, du fait de ces normes, les terminaux qui étaient antérieurement peu protégés laissent progressivement la place à des terminaux de plus en plus sécurisés. Parmi les points de sécurisation des terminaux, les industriels du secteur veillent plus particulièrement à la protection du lecteur de cartes à mémoire. Le lecteur de cartes à mémoire, en effet, reste un maillon faible du terminal de lecture de cartes à mémoire. Ceci est dû au fait que le lecteur de cartes à mémoire comprend une fente d'insertion de la carte à mémoire, cette fente rendant l'intérieur du terminal de lecture de cartes à mémoire accessible depuis l'extérieur. Plus particulièrement, des attaquants cherchent à se procurer un accès au connecteur de carte à mémoire. Le connecteur de cartes à mémoire est la partie du lecteur de cartes à mémoire qui entre en contact avec la puce ou le microprocesseur embarqué sur la carte à mémoire. Lorsqu'un attaquant parvient à avoir accès à ce connecteur de cartes à mémoire sans que quiconque s'en aperçoive, il lui est alors possible d'intercepter et de lire les données qui sont échangées entre la puce ou le microprocesseur de la carte et le processeur du terminal de lecture de cartes à mémoire. Parmi les données interceptées, on peut notamment citer le code secret saisi par le client lors de la demande de code secret, qui peut être véhiculé sans cryptage sur certaines cartes à puce non (ou mal) sécurisée.

Ceci explique que de nombreux efforts ont été portés à la sécurisation du lecteur de cartes à mémoire. Ainsi, par exemple, les lecteurs de cartes à mémoire ont été pourvus d'une protection avec treillis. Cette protection permet d'éviter une introduction par perçage au sein du terminal. Lorsqu'un objet tente de pénétrer dans l'enceinte de protection, un court-circuit est produit entraînant alors une mise hors service du terminal. Par ailleurs, des modifications visant à protéger les connecteurs de carte à mémoire contre les décharges électrostatiques et contre l'usure ont également été proposées. Il s'agit par exemple de disposer, à l'entrée du lecteur de cartes à mémoire, des pièces métalliques assurant le guidage mécanique (prévention contre l'usure) et/ou la décharge de la carte préalablement à son insertion dans le lecteur de cartes à mémoire. Communément, ces pièces métalliques se présentent sous la forme de tiges métalliques de guidage de quelques millimètres de hauteur. Un autre exemple consiste à ajouter des pièces métalliques qui se présentent sous la forme d'un peigne de décharge de la carte.

Toutes ces modifications ont entrainé une complexité de fabrication importante. Par ailleurs, le coût de fabrication a également augmenté. En effet, de multiples étapes d'assemblage et de soudure sont nécessaires à la construction d'un lecteur de cartes à mémoire. Ces étapes consistent notamment en l'assemblage de pièces les unes sur les autres (base réalisée en plastique rigide, un capot métallique, et un circuit imprimé qui surmonte le capot) puis au soudage de ces pièces assemblées sur une carte mère du terminal. Cette opération de soudage du lecteur de carte à mémoire est nécessairement réalisée après que les composants électroniques ont eux-mêmes été soudés sur la carte mère. Ainsi, l'opération de soudage du lecteur de cartes à mémoire est essentiellement manuelle.

Cette étape de montage et de soudage du corps du lecteur de cartes mémoires fait partie des nombreuses étapes de montage d'un terminal de lecture de cartes mémoires effectuée manuellement contribuant à un coût de fabrication élevé.

Il existe donc un besoin de fournir une solution qui permette de réduire le nombre d'opérations de montage effectuées manuellement afin de réduire le temps et le coût de fabrication de ces terminaux de lecture de cartes à mémoires.

WO 97/39418 Al divulgue un corps de lecteur de forme globalement parallélépipédique rectangle comprenant une demi-coquille supérieure métallique et une demi-coquille inférieure métallique. Un connecteur pour la lecture de cartes micro-SIM C est au moins partiellement disposé dans une cavité de la coquille supérieure. Une fente est formée dans le corps. La demi-coquille inférieure comporte deux parois latérales qui s'emboîtent dans les parois latérales de la demi-coquille supérieure.

### 3. Résumé de l'invention

La présente divulgation, d'en au moins certains modes de réalisation, résout toute ou partie des inconvénients de l'art antérieur. Ainsi, selon un premier aspect, on divulgue un corps de lecteur de cartes à mémoire, le corps de lecteur ayant une forme globalement parallélépipédique rectangle et comprenant une fente d'insertion d'une carte à mémoire, ledit corps de lecteur de cartes à mémoire comprenant une face supérieure constituée d'un capot et une face inférieure constituée d'une base dans laquelle est pratiqué un orifice traversant destiné à recevoir d'un connecteur de cartes à mémoire indépendant dudit corps de lecteur de cartes à mémoire, ledit corps de lecteur de cartes à mémoire est remarquable en ce que :
- ladite base est une pièce métallique comprenant des premiers moyens d'assemblage avec ledit capot disposés chacun sur au moins deux côtés opposés de ladite base,
- ledit capot est une pièce métallique comprenant des deuxièmes moyens d'assemblage avec ladite base disposés chacun sur au moins deux côtés opposés dudit capot, et en ce que
- les premiers moyens d'assemblage sont destinés à s'emboiter avec les deuxièmes moyens d'assemblage pour constituer deux parois latérales dudit corps de lecteur de cartes à mémoire, lesdites parois latérales présentant une forme globalement parallélépipédique rectangle et s'étendant sensiblement perpendiculairement à la face inférieure dudit corps de lecteur de cartes mémoire.

L'assemblage et la fixation d'un tel corps de lecteur de cartes à mémoire sur la carte mère sont simplifiés et peuvent être réalisés en un nombre restreint d'étapes automatisées réduisant ainsi le nombre d'interventions manuelles. Ceci est rendu possible d'un part par le fait que la base est métallique et d'autre part grâce à la géométrie des parois latérales du corps du lecteur de cartes à mémoire.

En effet, cette combinaison de caractéristiques permet de poser directement le corps du lecteur de cartes à mémoire sur une surface d'une carte mère, par exemple, et de passer le tout au four afin de souder le corps du lecteur de cartes à mémoire sur la carte mère sans intervention manuelle. Les parois latérales du corps du lecteur de cartes à mémoire présentant une forme globalement parallélépipédique rectangle, le corps du lecteur de cartes à mémoire repose sur la surface de la carte mère via une surface inférieure plane de ces parois latérales.

Ainsi, la carte mère n'a plus besoin de comprendre des orifices dans lesquels venaient s'insérer les pattes d'assemblages des corps de lecteur de cartes à mémoire de l'art antérieur en vue de leur soudage.

Un corps de lecteur de cartes à mémoire selon la présente technique permet avantageusement de monter automatiquement, c'est-à-dire sans intervention manuelle, le corps du lecteur de cartes à mémoire sur la carte mère. Il permet également de libérer de l'espace sur la carte mère pour d'autres composants tel qu'un clavier. En effet, la disparation des orifices destinés à recevoir les pattes d'assemblage sur la carte mère contribue à libérer de l'espace qui peut être utilisé pour agrandir le clavier, pour disposer d'autres composants sur la carte mère ou pour disposer des composants déjà présents mais différemment et de manière plus efficace sur la carte mère.

Le fait que la base soit réalisée en métal contribue également au gain d'espace au niveau de la carte mère. En effet, à rigidité équivalente, une base en métal a des parois plus fines qu'une base en plastique.

Selon une implémentation particulière du corps de lecteur de cartes à mémoire, une fois emboités, les premiers et les deuxièmes moyens d'assemblage sont fixés les uns aux autres par soudage.

Ainsi, le capot et la base sont solidaires. Un tel corps de lecteur de cartes à mémoire est alors résistant aux chocs.

Selon une implémentation particulière du corps de lecteur de cartes à mémoire, le métal constituant le capot est dopé avec des atomes de carbone.

Ceci permet de protéger le connecteur de cartes à mémoire de certaines perturbations électromagnétiques notamment liées à l'utilisation de certaines bandes de fréquences de téléphonie mobile telles que les bandes de fréquences conformes au standard GMS.

L'invention a également pour objet un système de lecture de cartes à mémoire comprenant :
- une carte mère sur une surface de laquelle est fixé un connecteur de cartes à mémoire, et
- un corps de lecteur de cartes à mémoire selon la revendication 1 disposé sur ladite surface de la carte mère de manière à ce que le connecteur de cartes à mémoire prenne place au sein de l'orifice traversant destiné à recevoir de connecteur de cartes à mémoire dudit corps de lecteur de cartes mémoire,
ledit système étant remarquable en ce que les parois latérales dudit corps de lecteur de cartes mémoire sont soudées sur la surface de la carte mère au moyen d'un apport de matière disposé entre une surface inférieure desdites parois latérales dudit corps de lecteur de cartes mémoire et la surface de la carte mère.

La fixation est réalisée par soudage, brasage, collage. La matière utilisée est fonction du mode de fixation final désiré et des éventuelles fonctions de sécurité associées à cette manière de fixée (notamment lorsque la fixation doit être conductrice pour porter une fonction de sécurité, telle qu'un court-circuit).

L'étape de fixation du corps du lecteur de cartes à mémoire sur la carte mère s'effectue automatiquement en déposant de la matière, telle qu'une pâte abrasive, sur la surface inférieure des parois latérales du corps du lecteur de cartes à mémoire préalablement au placement du corps du lecteur de cartes à mémoire sur la carte mère. Le tout est ensuite placé au four afin que le corps du lecteur de cartes à mémoire soit soudé sur la carte mère.

L'invention concerne encore un procédé de montage d'un système de lecture de cartes à mémoire tel que décrit précédemment, le procédé comprenant :
- une étape de fixation du connecteur de cartes à mémoire sur une surface de la carte mère,
- une étape de pose du corps de lecteur de cartes à mémoire sur ladite surface de la carte mère de manière à ce que le connecteur de cartes à mémoire prenne place au sein de l'orifice traversant destiné à recevoir ledit connecteur de cartes à mémoire dudit corps de lecteur de cartes mémoire,
- une étape de fixation desdites parois latérales dudit corps de lecteur de cartes mémoire sur la surface de la carte mère au moyen d'un apport de matière disposé entre une surface inférieure desdites parois latérales dudit corps de lecteur de cartes mémoire et la surface de la carte mère.

Un dernier objet de l'invention concerne enfin un terminal de lecture de cartes à mémoire comprenant un système de lecture de cartes à mémoire selon l'invention.

Les différents modes de réalisation mentionnés ci-dessus sont combinables entre eux pour la mise en oeuvre de l'invention.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- [Fig.1] la [Fig.1] illustre les différents constituants d'un connecteur de carte à mémoire selon l'art antérieur ;
- [Fig.2]la [Fig.2] représente un tel connecteur de carte à mémoire de l'art antérieur une fois assemblé ;
- [Fig.3][Fig.4] les figures 3 et 4 représentent un connecteur de carte à mémoire de l'art antérieur assemblé respectivement avant qu'il ne soit monté sur une carte mère et une fois monté sur une carte mère ;
- [Fig.5] la [Fig.5] représente un connecteur de carte à mémoire assemblé, selon un mode de réalisation de l'invention, avant qu'il ne soit monté sur une carte mère ;
- [Fig.6] la [Fig.6] représente les différents constituants d'un connecteur de carte à mémoire selon un mode de réalisation de l'invention ;
- [Fig.7] la [Fig.7] représente un connecteur de carte à mémoire assemblé, selon un mode de réalisation de l'invention, une fois monté sur une carte mère,
- [Fig.8] la [Fig.8] représente les différentes étapes d'un procédé de montage, sur une carte mère, d'un corps de lecteur de cartes à mémoire selon un mode d réalisation de l'invention,
- [Fig.9] la [Fig.9] un clavier disposé sur une surface de la carte mère opposée à la surface sur laquelle est fixée le corps du lecteur de cartes à mémoire selon un mode de réalisation de l'invention.

### 5. Description détaillée

Le principe général de l'invention consiste à proposer un corps de lecteur de cartes à mémoire formé de deux parties principales distinctes : une base et un capot tous deux réalisés en métal et qui, lorsqu'ils sont emboités l'un dans l'autre, forment un corps de lecteur de cartes à mémoire présentant des parois latérales de forme globalement parallélépipédique rectangle s'étendant sensiblement perpendiculairement à la face inférieure dudit corps de lecteur de cartes mémoire.

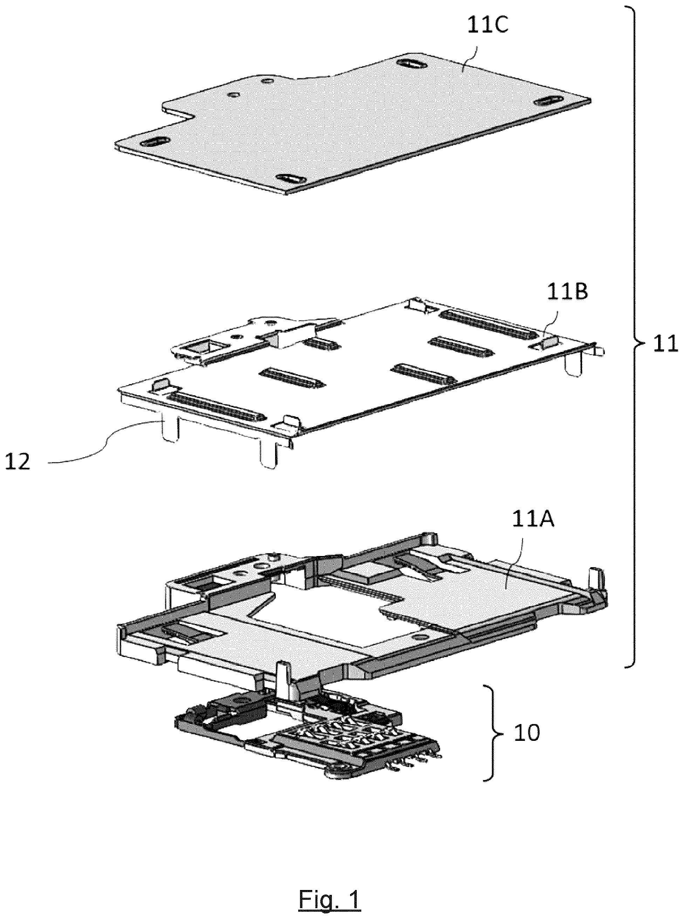

On décrit, en relation avec la [Fig.1], un connecteur de carte à mémoire 10 en relation avec l'art antérieur, qui est construit indépendamment d'un corps du lecteur de cartes à mémoire 11. Le connecteur de carte à mémoire 20 est destiné à être connecté à un circuit imprimé principal (non représenté), typiquement la carte mère du terminal de lecture de cartes mémoire au sein duquel il est installé, afin d'assurer le fonctionnement du lecteur et son interconnexion avec les autres composants du terminal de lecture de cartes mémoire.

Le corps du lecteur de cartes à mémoire 11 comprend par exemple trois parties principales : une base 11A réalisée en plastique rigide, un capot 11B métallique, et un circuit imprimé 11C qui surmonte le capot 11B. La base 11A comprend un orifice traversant (un logement) destiné à recevoir du connecteur de cartes à mémoire 10. Ce logement prend la forme d'un orifice traversant la base -11A de part en part, et dans lequel le connecteur de cartes à mémoire 10 vient se loger lorsque la base 11A est positionnée sur la carte mère. Le capot 11B est ensuite assemblé sur la base 11A, de manière à former la fente d'insertion d'une carte à mémoire au sein du lecteur de cartes à mémoire. Enfin, le circuit imprimé 11C est fixé sur la face supérieure du capot 11B, de manière à en recouvrir une majeure partie, idéalement l'intégralité. Alternativement, le bloc formé par le capot 11B et le circuit imprimé 11C peut avoir été préassemblé, en amont de la phase de montage du lecteur de cartes à mémoire. Dans ce cas, c'est l'ensemble de ce bloc préassemblé qui est positionné sur la base 11A lors du montage du lecteur.

La base 11A et le capot 11B comprennent tous deux des pattes d'assemblage 12 qui permettent d'assembler la base 11A et le capot 11B pour former le corps du lecteur de cartes à mémoire. Ces pattes d'assemblage 12 sont disposées sur au moins deux côtés opposés de la base 11A et du capot 11B.

Le circuit imprimé 11C comprend au moins un élément de protection, qui se présente par exemple sous la forme d'un ou de plusieurs treillis de détection d'intrusion ou sous la forme d'une ou de plusieurs pistes continues de détection d'intrusion (par exemple un circuit de masse, et deux treillis à des potentiels différents). Ce ou ces éléments de protection sont positionnés de sorte à couvrir une majeure partie de la surface du circuit imprimé 11C. Idéalement, ils sont répartis sur toute la surface du circuit imprimé 11C, de manière à assurer une sécurisation accrue du lecteur de cartes à mémoire.

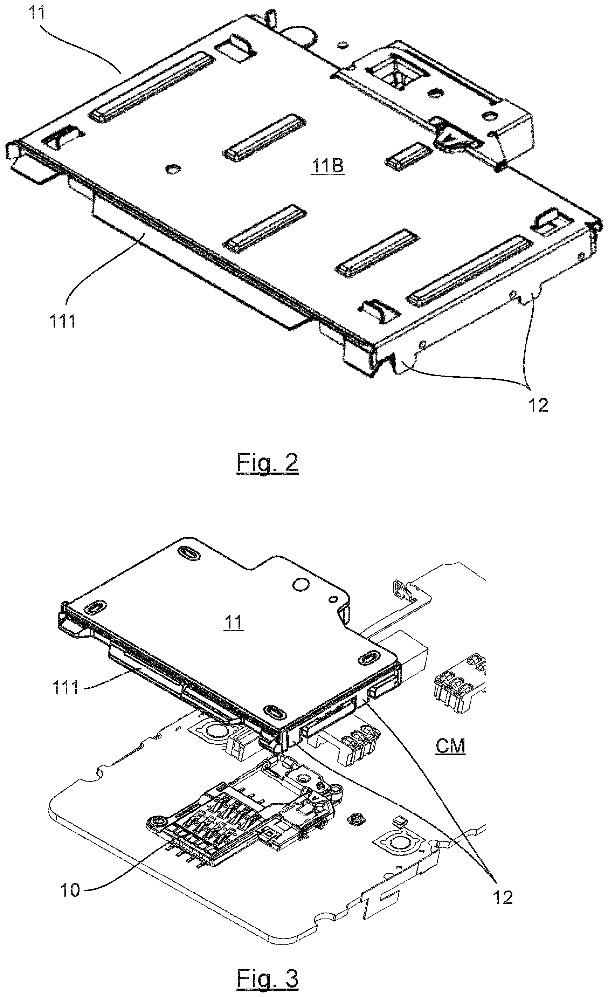

Une fois assemblé, et comme représenté à la [Fig.2], le corps du lecteur de cartes à mémoire 11 est une pièce de forme globalement parallélépipédique rectangle, la base 11A et le capot 11B formant ensemble une fente d'insertion 111 qui permet d'insérer une carte à mémoire dans une position correcte pour qu'elle entre en contact avec le connecteur de carte à mémoire 10, une fois en position de butée.

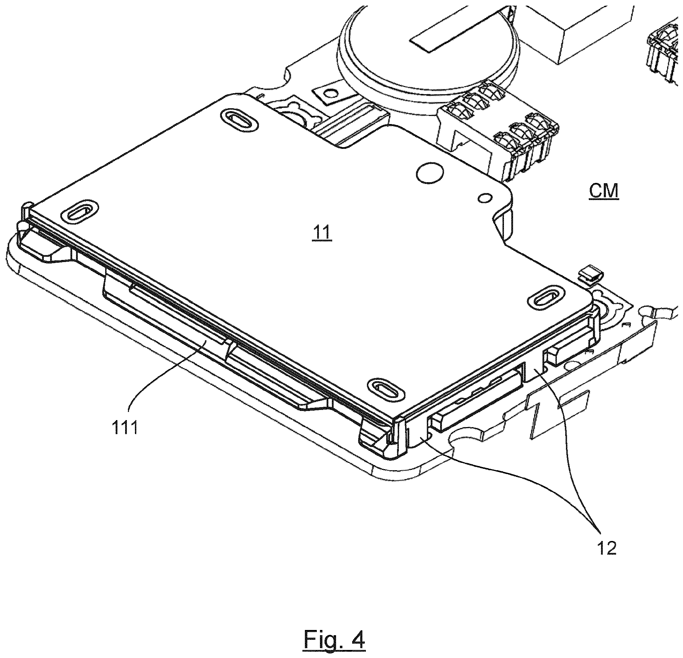

En référence à la [Fig.3] et à la [Fig.4], lorsque le corps du lecteur de cartes mémoires 11 est assemblé, les pattes d'assemblage 12 du capot 11B dépassent légèrement de la surface inférieure de la base 11A. L'extrémité de chacune de ces pattes d'assemblage 12 est destinée à être introduite dans un orifice 13 correspondant prévu à cet effet sur la carte mère CM dans lesquels elles sont soudées. L'ensemble de ces explications permet de prendre la mesure des opérations à réaliser pour effectuer un montage de lecteur de carte à mémoire, l'un des problèmes, comme précisé ci-après, étant de devoir effectuer la soudure de ce connecteur de carte à mémoire manuellement, après que les composants électroniques aient été soudées (automatiquement).

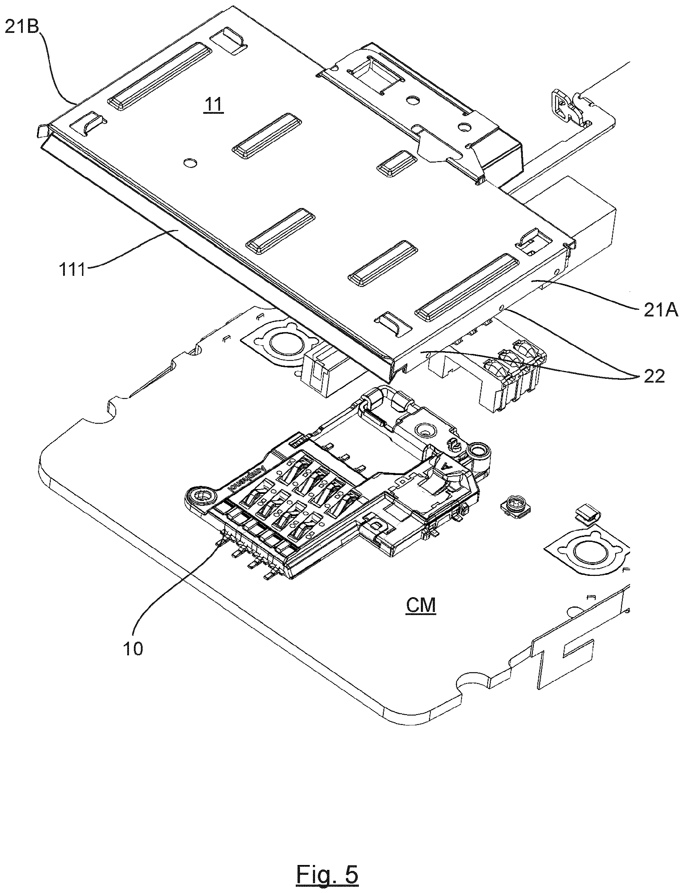

Ainsi, le principe général de l'invention est décrit plus en détail en relation avec la [Fig.5]. Selon la technique proposée, un connecteur de carte à mémoire 10 est construit indépendamment d'un corps du lecteur de cartes à mémoire 11. Le connecteur de carte à mémoire 10 est conçu afin de permettre une lecture des signaux émanant de la carte à mémoire (non représentée). Pour ce faire, le connecteur de carte à mémoire 10 comprend un certain nombre de pins (huit sur la [Fig.5]), permettant d'entrer en contact avec des zones correspondantes de la puce de la carte à mémoire (généralement six ou huit zones, selon le type de carte à mémoire). Ces pins sont en général des lames ressort métalliques qui se positionnent sur la surface de la puce. Le connecteur de carte à mémoire 10 est par ailleurs destiné à être connecté à un circuit imprimé principal, typiquement la carte mère CM d'un terminal de lecture de cartes à mémoire au sein duquel il est installé, afin d'assurer le fonctionnement du lecteur de cartes à mémoire et son interconnexion avec les autres composants du terminal de lecture de cartes à mémoire. Dans la suite du document, ce circuit imprimé principal, sur lequel est par exemple soudé le connecteur 10, est désigné sous le terme de « carte mère » CM. Il convient cependant de noter que le terme « carte mère » ne doit pas être entendu dans un sens restrictif, et que dans certains modes de réalisation le circuit imprimé principal n'est pas nécessairement la carte mère du terminal de lecture. L'objet de la divulgation n'étant pas le connecteur de carte à mémoire, sa description détaillée ne sera pas réalisée plus en avant.

Le connecteur de carte à mémoire 10 est indépendant du corps du lecteur de cartes à mémoire 11. En d'autres termes, le connecteur de carte à mémoire 10 n'est pas assemblé avec le corps du lecteur de cartes à mémoire 11 avant d'être assemblé à la carte mère CM du terminal de lecture de cartes à mémoire : selon la technique proposée, le connecteur de carte à mémoire 10 est fixé en premier lieu sur la carte mère CM, puis le corps du lecteur de cartes à mémoire 11 préalablement assemblé est posé par-dessus le connecteur 10 sur la carte mère CM pour y être soudé au four.

Avantageusement, l'assemblage et la fixation du lecteur de cartes à mémoire sur la carte mère CM sont simplifiés et peuvent être réalisés en un nombre restreint d'étapes automatisées. La mise en oeuvre d'un corps de lecteur de cartes à mémoire 11 dont la base et le capot sont réalisés en métaux permet de réduite les coûts de fabrication d'un tel lecteur de cartes à mémoire tout en offrant un gain de place non négligeable au niveau de la carte mère CM. Un tel gain d'espace au niveau de la carte mère peut permettre d'augmenter les dimensions d'un clavier par exemple.

Comme on peut le voir à la [Fig.5], le corps de lecteur de cartes à mémoire 11 selon la technique proposée, est, par exemple, une pièce de forme globalement parallélépipédique rectangle, d'une largeur d'environ cinquante-cinq millimètres, d'une profondeur d'environ trente-deux millimètres et d'une hauteur d'environ quatre millimètres. Assemblés, la base 11A et le capot 11B forment ensemble une fente d'insertion 111 qui permet d'insérer une carte à mémoire dans une position correcte pour qu'elle entre en contact avec le connecteur de carte à mémoire, une fois en position de butée. Cette fente d'insertion a une hauteur comprise entre 0.85 et 1.20 millimètres.

Par la suite, on décrit un mode de réalisation spécifique de l'invention, étant entendu que ce mode de réalisation ne limite en rien la portée de l'invention. Plus particulièrement, dans d'autres modes de réalisation de l'invention, les formes de la base et du capot ne sont pas limitées à ceux décrits par la suite.

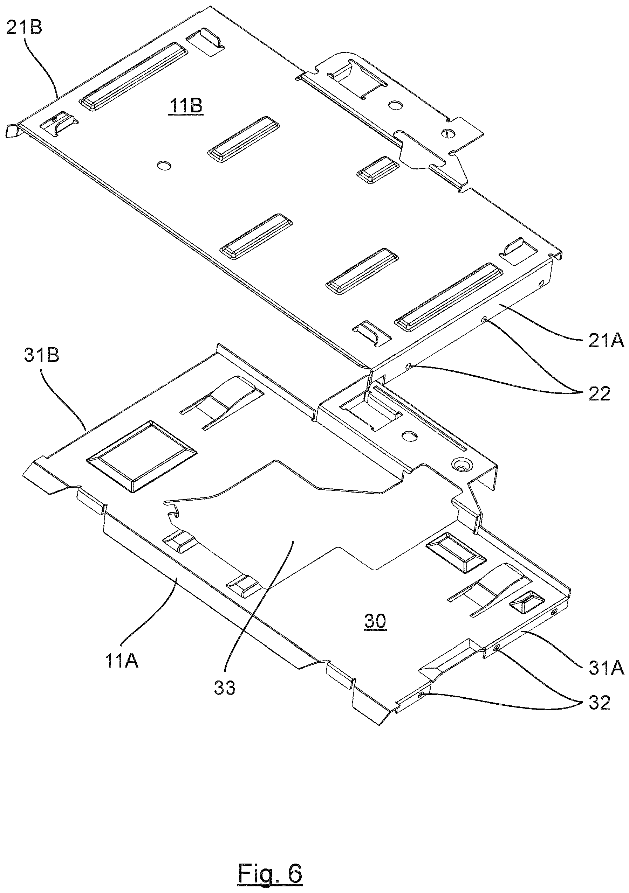

Ce mode de réalisation est présenté plus particulièrement en relation avec les figures 6 à 8. Ce mode de réalisation comprend des caractéristiques non décrites précédemment. En revanche, des références numériques identiques sont utilisées pour les éléments qui ont déjà été décrits dans les figures 1-5.

En référence à la [Fig.6], le corps du lecteur de cartes à mémoire 11 comprend deux parties principales : une base 11A, un capot 11B. Dans certaines implémentations, un circuit imprimé (non représenté sur les figures) surmonte le capot 11B afin de protéger le corps du lecteur de cartes à mémoire d'éventuelles intrusions.

Le capot 11B a une forme globalement parallélépipédique rectangle, avec une surface principale 20 globalement plane et rectangulaire et deux parois latérales 21A, 21B de forme globalement parallélépipédique rectangle. Les parois latérales 21A, 21B sont sensiblement perpendiculaires à la surface principale 20 du capot 11B, et constituent des moyens d'assemblage avec une base 11A décrite ultérieurement.

Les parois latérales 21A, 21B comprennent des moyens de fixation 22, pouvant prendre la forme de culs d'oeufs permettant de fixer le capot 11B sur la base 11A comme il sera décrit ultérieurement.

La base 11A du corps du lecteur de cartes à mémoire 11 est présentée plus en détail en relation avec la [Fig.6] dans un mode de réalisation particulier de la technique proposée. La base 11A est également de forme globalement parallélépipédique rectangle.

Elle comprend également une surface principale 30 et deux parois latérales (31A, 31B de forme globalement parallélépipédique rectangle. Les parois latérales 31A, 31B sont sensiblement perpendiculaires à la surface principale 30 de la base 11A, et constituent des moyens d'assemblage avec le capot 11B.

Les parois latérales 31A, 31B comprennent des moyens de fixation 32, pouvant prendre la forme de culs d'oeufs permettant de fixer le capot 11B sur la base 11A comme il sera décrit ultérieurement.

La base 11A comprend également un logement 33 destiné à recevoir le connecteur de carte à mémoire 10 lors du montage du corps du lecteur de cartes à mémoire 11 sur la carte mère CM. Ce logement 33 prend la forme d'un orifice traversant la base 11A de part en part. La forme de ce logement 33 de réception est sensiblement complémentaire à la forme du connecteur de carte à mémoire 10. Dans un mode de réalisation particulier, la base 11A comprend des pions de centrage (non représentés), permettant d'assurer un centrage correct de la base 11A sur le connecteur 10 lors du montage.

Dans le mode de réalisation présenté, la base 11A du corps du lecteur de cartes à mémoire 11 a pour fonction principale d'assurer le guidage d'une carte à mémoire lors de son insertion dans le lecteur de cartes à mémoire. En outre, de manière astucieuse, dans au moins une variante, la base 11A comprend une ou plusieurs des caractéristiques suivantes :
- elle intègre des freins de carte permettant d'éviter les chocs sur les butées cartes ; de tels freins de carte sont constitués, par exemple, de deux lamelles souples; chacune de ces lamelles forme un angle prédéterminé par rapport à la surface (plane) de guidage de la carte à mémoire ; en fonction des mode de réalisation, l'angle d'inclinaison d'une lamelle peut être différent de l'angle d'inclinaison de l'autre lamelle ;
- elle est réalisée dans une matière dissipative, ce qui permet de limiter les effets de décharges électrostatiques sur un terminal de lecture ; cette caractéristique de décharge électrostatique peut être couplée à la caractéristique précédente : les lamelles, chacune avec une inclinaison différente, sont à même de freiner la carte d'une part et de la décharger de son électricité statique d'autre part, de manière progressive ;
- elle comprend un élément de protection, sur sa face inférieure.

Ces caractéristiques complémentaires découlent astucieusement de la mise en oeuvre d'un corps de lecteur de cartes à mémoire 11 qui présente une fente d'insertion obtenue par l'assemblage de deux parties emboitables (base 11A et capot 11B). En effet, de telles caractéristiques ne peuvent pas être mise en oeuvre avec un corps de lecteur de cartes à mémoire 11en une seule et unique partie car la technicité de ces caractéristiques l'en empêche.

La base 11A étant métallique, sa forme peut alors par exemple être obtenue très simplement à partir d'une simple plaque métallique, au moyen de techniques usuelles de découpage et d'embossage. Les parois latérales 31A, 31B et les moyens de fixation 32 peuvent par exemple être obtenus par simple pliage et embossage d'une telle plaque métallique préalablement découpée.

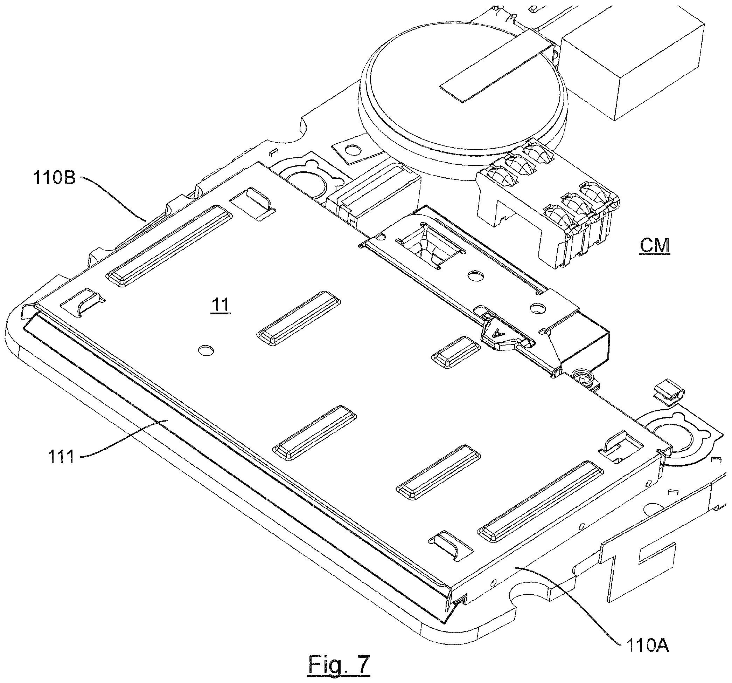

En référence à la [Fig.5], précédemment décrite, et en référence aux [Fig.7] et 8, les principales étapes mises en oeuvre pour réaliser le montage d'un lecteur de cartes à mémoire sont maintenant décrites, dans un mode de réalisation particulier de la technique proposée.

Dans une première phase, le corps du lecteur de cartes à mémoire 11 est assemblé de manière automatisée par un robot.

Ainsi au cours d'une étape E1 le capot 11B est assemblé avec la base 11A. Les moyens de fixation 22 disposés sur les parois latérales 21A, 21B du capot 11B viennent de fixer dans les moyens de fixation 32 disposés sur les parois latérales 31A, 31B de la base 11A. Les parois latérales 21A, 21B, 31A et 31B ainsi assemblées constituent les parois latérales 110A, 110B du corps du lecteur de cartes à mémoire 11 lesquelles présentent une forme globalement parallélépipédique rectangle et s'étendent sensiblement perpendiculairement à la face inférieure dudit corps de lecteur de cartes mémoire 11.

Dans une étape E2 facultative, le capot 11B et la base 11A, une fois assemblés au cours de l'étape E1, sont soudés au niveau des moyens de fixation 22 et 32.

Parallèlement, le connecteur de lecteur de carte 10 est monté sur la carte mère CM.

Au cours d'une étape E3, un matériau, telle qu'une pâte abrasive, est appliquée sur la surface inférieure des parois latérales 110A, 110B du corps du lecteur de cartes à mémoire 11.

Ensuite, dans une étape E4, le corps du lecteur de cartes à mémoire 11 est posé sur la surface de la carte mère CM de sorte que le connecteur 10 vient se loger dans le logement 33 prévu dans la base 11A du corps du lecteur de cartes à mémoire 11 et de sorte que la surface inférieure des parois latérales 110A, 110B recouverte du matériau soit en contact avec la surface de la carte mère CM.

Enfin, dans une étape E5, le tout est passé au four afin que le matériau disposé entre la surface inférieure des parois latérales 110A, 110B et la surface de la carte mère CM permette le soudage du corps de lecteur de cartes à mémoire 11 et la carte mère CM.

Ainsi, il ne faut que quelques étapes simples et automatisées pour assembler et fixer le corps de lecteur de cartes à mémoire 11 sur la carte mère CM.

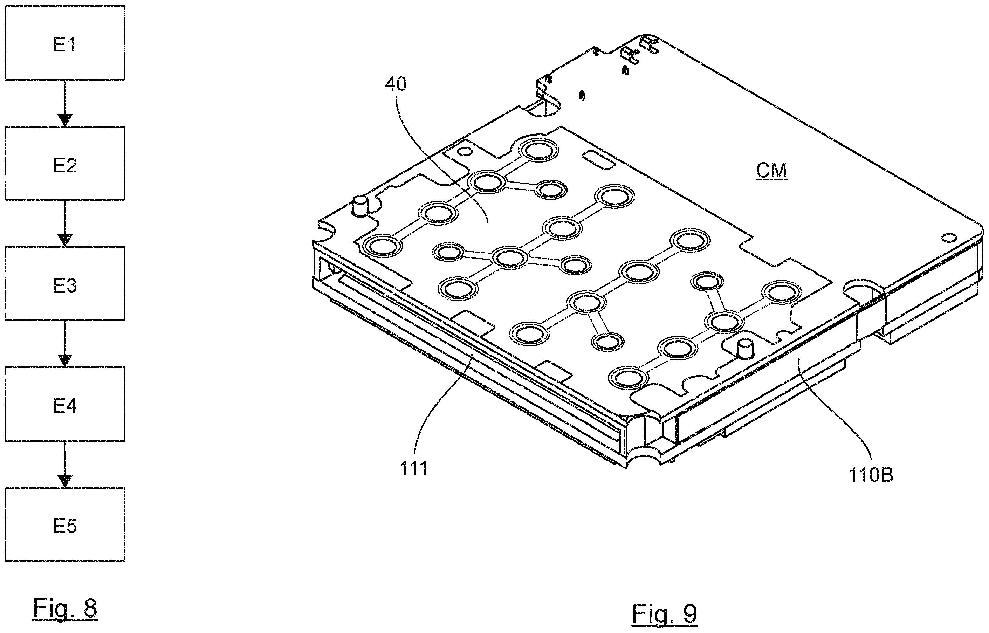

La [Fig.9] représente un clavier 40 disposé sur une surface de la carte mère CM opposée à la surface sur laquelle est fixée le corps du lecteur de cartes à mémoire. On voit sur cette figure qu'en l'absence des orifices 13 présents sur les cartes mère de l'art antérieur, il est possible d'agrandir le clavier 40. Les caractéristiques présentées dans les différents modes de réalisation décrits sont bien entendues combinables de manière individuelle ou groupée avec le principe général précédemment introduit, sans sortir du cadre de la présente invention.

## Revendications

1. Corps de lecteur de cartes à mémoire (11), le corps de lecteur ayant une forme globalement parallélépipédique rectangle et comprenant une fente d'insertion (111) d'une carte à mémoire, ledit corps de lecteur de cartes à mémoire comprenant une face supérieure constituée d'un capot (11B) et une face inférieure constituée d'une base (11A) dans laquelle est pratiqué un orifice traversant (33) destiné à recevoir un connecteur de cartes à mémoire (10) indépendant dudit corps de lecteur de cartes à mémoire, ledit corps de lecteur de cartes à mémoire dans lequel
- ladite base est une pièce métallique comprenant des premiers moyens d'assemblage (31A,31B) avec ledit capot disposés chacun sur au moins deux côtés opposés de ladite base,
- ledit capot est une pièce métallique comprenant des deuxièmes moyens d'assemblage (21A,21B) avec ladite base disposés chacun sur au moins deux côtés opposés dudit capot, et
- les premiers moyens d'assemblage sont destinés à s'emboiter avec les deuxièmes moyens d'assemblage pour constituer deux parois latérales (110A,110B) dudit corps de lecteur de cartes à mémoire, lesdites parois latérales présentant une forme globalement parallélépipédique rectangle et s'étendant sensiblement perpendiculairement à la face inférieure dudit corps de lecteur de cartes mémoire.

2. Corps de lecteur de cartes à mémoire selon la revendication 1 dans lequel une fois emboités, les premiers et les deuxièmes moyens d'assemblage sont fixés les uns aux autres par soudage.

3. Corps de lecteur de cartes à mémoire selon la revendication 1 dans lequel le métal constituant le capot est dopé avec des atomes de carbone.

4. Système de lecture de cartes à mémoire comprenant :
- une carte mère (CM) sur une surface de laquelle est fixé un connecteur de cartes à mémoire (10), et
- un corps de lecteur de cartes à mémoire selon la revendication 1 disposé sur ladite surface de la carte mère de manière à ce que le connecteur de cartes à mémoire prenne place au sein de l'orifice traversant (33) destiné à recevoir ledit connecteur de cartes à mémoire dudit corps de lecteur de cartes mémoire, ledit système dans lequel les parois latérales (110A,110B) dudit corps de lecteur de cartes mémoire sont soudées sur la surface de la carte mère au moyen d'un apport de matière disposé entre une surface inférieure desdites parois latérales dudit corps de lecteur de cartes mémoire et la surface de la carte mère.

5. Procédé de montage d'un système de lecture de cartes à mémoire selon la revendication 4, le procédé comprenant:
- une étape de fixation du connecteur de cartes à mémoire (10) sur une surface de la carte mère (CM),
- une étape de pose du corps de lecteur de cartes à mémoire sur ladite surface de la carte mère de manière à ce que le connecteur de cartes à mémoire prenne place au sein de l'orifice traversant destiné à recevoir ledit connecteur de cartes à mémoire dudit corps de lecteur de cartes mémoire,
- une étape de fixation desdites parois latérales (110A,110B) dudit corps de lecteur de cartes mémoire sur la surface de la carte mère au moyen d'un apport de matière disposé entre une surface inférieure desdites parois latérales dudit corps de lecteur de cartes mémoire et la surface de la carte mère.

6. Terminal de lecture de cartes à mémoire comprenant un système de lecture de cartes à mémoire selon la revendication 4.

## Patentansprüche

1. Speicherkarten-Leserkörper (11), wobei der Leserkörper eine im Allgemeinen rechteckige Parallelepipedform hat und einen Einführschlitz (111) für eine Speicherkarte umfasst, wobei der Speicherkarten-Leserkörper eine Oberseite umfasst, die aus einer Abdeckung (11B) besteht, und eine Unterseite, die aus einer Basis (11A) besteht, in der eine Durchgangsöffnung (33) zur Aufnahme eines Speicherkartenverbinders (10) unabhängig vom Speicherkarten-Leserkörper ausgebildet ist, wobei der Speicherkarten-Leserkörper (10) in dem:
- die Basis ein Metallstück ist, das erste Mittel (31A, 31B) zum Verbinden mit der Haube umfasst, die jeweils auf mindestens zwei gegenüberliegenden Seiten der Basis angeordnet sind,
- die Haube ein Metallstück ist, das zweite Mittel (21A, 21B) zum Verbinden mit der Basis umfasst, die jeweils auf mindestens zwei gegenüberliegenden Seiten der Haube angeordnet sind, und
- die ersten Verbindungsmittel dazu bestimmt sind, mit den zweiten Verbindungsmitteln ineinander zu greifen, um zwei Seitenwände (110A, 110B) des Speicherkartenleser-Körpers zu bilden, wobei die Seitenwände eine insgesamt rechteckige Parallelepipedform aufweisen und sich im Wesentlichen senkrecht zur Unterseite des Speicherkartenleser-Körpers erstrecken.

2. Gehäuse eines Speicherkartenlesers nach Anspruch 1, bei dem nach dem Ineinanderstecken die ersten und zweiten Verbindungsmittel durch Schweißen aneinander befestigt sind.

3. Gehäuse eines Speicherkartenlesers nach Anspruch 1, bei dem das Metall, aus dem die Abdeckung besteht, mit Kohlenstoffatomen dotiert ist.

4. System zum Lesen von Speicherkarten, bestehend aus:
- eine Hauptplatine (CM), auf deren einer Oberfläche ein Speicherkartensteckplatz befestigt ist, und
- einen Speicherkartenleser-Körper nach Anspruch 1, der auf der genannten Oberfläche der Hauptplatine so angeordnet ist, dass der Speicherkartenverbinder innerhalb der Durchgangsöffnung (33) zur Aufnahme des genannten Speicherkartenverbinders des genannten Speicherkartenleser-Körpers Platz findet, das System, bei dem die Seitenwände (110A, 110B) des Speicherkartenleser-Körpers mit der Oberfläche der Hauptplatine mittels einer Materialzufuhr verschweißt sind, die zwischen einer unteren Oberfläche der Seitenwände des Speicherkartenleser-Körpers und der Oberfläche der Hauptplatine angeordnet ist.

5. Verfahren zur Montage eines Speicherkarten-Lesesystems nach Anspruch 4, wobei das Verfahren umfasst:
- einen Schritt des Befestigens des Speicherkartensteckers (10) an einer Oberfläche der Hauptplatine (CM),
- einen Schritt des Aufsetzens des Speicherkartenleserkörpers auf die Oberfläche der Hauptplatine, so dass der Speicherkartenverbinder innerhalb der Durchgangsöffnung zur Aufnahme des Speicherkartenverbinders des Speicherkartenleserkörpers Platz findet,
- einen Schritt des Befestigens der Seitenwände (110A, 110B) des Speicherkartenleserkörpers an der Oberfläche der Hauptplatine mittels einer Materialzufuhr, die zwischen einer unteren Oberfläche der Seitenwände des Speicherkartenleserkörpers und der Oberfläche der Hauptplatine angeordnet ist.

6. Endgerät zum Lesen von Speicherkarten, das ein System zum Lesen von Speicherkarten nach Anspruch 4 umfasst.

## Claims

1. Memory card reader body (11), the reader body having a globally rectangular parallelepiped shape and comprising a slot (111) for inserting a memory card, said memory card reader body comprising an upper face consisting of a cover (11B) and a lower face consisting of a base (11A) in which a through orifice (33) is made for receiving a memory card connector (10) independent of said memory card reader body, said memory card reader body (10) wherein:
- said base is a metal part comprising first means of assembly (31A, 31B) with said cover, each disposed on at least two opposite sides of said base,
- said cover is a metal part comprising second means of assembly (21A, 21B) with said base, each disposed on at least two opposite sides of said cover, and
- the first assembly means are intended to fit together with the second assembly means to form two side walls (110A, 110B) of said memory card reader body, said side walls having a generally rectangular parallelepiped shape and extending substantially perpendicular to the lower face of said memory card reader body.

2. Memory card reader body according to claim 1 wherein, once fitted together, the first and second assembly means are fixed to one another by welding.

3. Memory card reader body according to claim 1 wherein the metal constituting the cover is doped with carbon atoms.

4. Memory card reading system comprising:
- a motherboard (CM) on a surface of which a memory card connector is fixed, and
- a memory card reader body according to claim 1 arranged on said surface of the motherboard so that the memory card connector is located within the through orifice (33) intended to receive said memory card connector of said memory card reader body,
said system wherein the side walls (110A, 110B) of said memory card reader body are welded to the surface of the motherboard by means of a filler material disposed between a lower surface of said side walls of said memory card reader body and the surface of the motherboard.

5. A method of assembling a memory card reading system according to claim 4, the method comprising:
- a step of fixing the memory card connector (10) to a surface of the motherboard (CM),
- a step of placing the memory card reader body on said surface of the motherboard so that the memory card connector is positioned within the through orifice intended to receive said memory card connector of said memory card reader body,
- a step of fixing said side walls (110A, 110B) of said memory card reader body to the surface of the motherboard by means of a filler material arranged between a lower surface of said side walls of said memory card reader body and the surface of the motherboard.

6. A memory card reading terminal comprising a memory card reading system as claimed in claim 4.
